# EUROPÄISCHE PATENTSCHRIFT

(11) **EP 0 718 540 B1**
(45) Veröffentlichungstag und Bekanntmachung des Hinweises auf die Patenterteilung: **21.02.2001**
(21) Anmeldenummer: 95119970.2
(22) Anmeldetag: 18.12.1995
(51) Int. Cl.: F16L 59/02

(54) **Wärmeabschirmeinrichtung**
Heat shielding device
Dispositif de bouclier thermique

(30) Priorität: 19.12.1994 DE 4445118
(43) Veröffentlichungstag der Anmeldung: 26.06.1996
(73) Patentinhaber: Hecralmat, 9494 Schaan (LI)
(72) Erfinder: Pirchl, Gerhard, 5708 Birrwil (CH)
(74) Vertreter: Riebling, Peter, Dr.-Ing.

(56) Entgegenhaltungen:
- EP-A- 0 439 432
- DE-A- 2 653 693
- DE-A- 4 300 817

## Beschreibung

Gegenstand der Erfindung ist eine Wärmeabschirmeinrichtung, insbesondere in ihrer Anwendung zur Wärmeabschirmung von wärmeabstrahlenden Teilen, insbesondere Kfz.-Teilen, wie z.B. Motoren, Auspufftöpfen, Katalysatoren und dergleichen mehr.

Mit dem Gegenstand des Gebrauchsmusters G 91 03 864 oder der US 4 703 159 sind Wärmeschutzeinrichtungen bekannt geworden, die im wesentlichen aus stapelförmig übereinander gelegten Folien bestehen, die mit Noppen oder dergleichen versehen sind, um eine abstandshaltende Wirkung zu erzielen.

Durch die Verwendung von mehreren im Stapel übereinander gelegten Folien, die entsprechend genoppt sind, soll ein Luftpolster in diesem Stapel erzeugt werden, welches der Wärmeabschirmung dient.

Ein derartiger Aufbau ist außerordentlich aufwendig, kostspielig in der Herstellung und kann leicht beschädigt werden. Im Falle der Beschädigung geht die Isolationswirkung verloren. Wegen der Verwendung von relativ dünnem Folienmaterial im Bereich von etwa 0,05 mm, besteht der Nachteil, daß jeder Folienstapel durch mechanischen Druck von außen leicht beschädigt werden kann, wodurch ebenfalls die Isolationswirkung verloren geht.

Außerdem besteht große Korrosionsgefahr im Bereich des Stapels, weil im Bereich der Zwischenräume unkontrollierte Prozesse durch Schwitzwasser und Salzwasser stattfinden können.

Außerdem besteht der weitere Nachteil, daß durch die Formung der relativ dünnwandigen Folien 7 - 10% der Dehnung bei Wärmeeinwirkung grob kristalline Strukturen entstehen, welche die Korrosionsfestigkeit erheblich herabsetzen.

Außerdem wird hierdurch auch das Zeitstandverhalten erheblich vermindert.

Der Erfindung liegt die Aufgabe zugrunde, eine Wärmeschutzeinrichtung der eingangs genannten Art so weiterzubilden, daß bei wesentlich geringeren Herstellungskosten ein besseres Zeitspannverhalten, eine bessere Korrosionsfestigkeit, eine verbesserte Vibrationssicherheit und ein leichteres Gewicht gegeben sind.

Ferner soll mindestens eine gleich gute oder eine verbesserte Temperaturisolierung gegeben sein.

Zur Lösung der gestellten Aufgabe ist die Erfindung durch die technische Lehre des Anspruchs 1 gekennzeichnet.

Wesentliches Merkmal der Erfindung ist, daß nun lediglich mindestens ein Blech als Hitzeschild verwendet wird, welche in halboffener Bauweise das abzuschirmende Bauteil umgibt, wobei die Blechoberfläche dieses Bleches an mindestens einer Seite, vorzugsweise jedoch beide Seiten, eine wellenförmige Struktur im Mikrometerbereich aufweist.

Wichtig ist, daß die Rauhigkeit dieser Wellenform einen stetigen Verlauf besitzt, d.h. es dürfen keine Spitzen und Scharten enthalten sein und die Rauhigkeit soll im Bereich von maximal 0.5 Mikrometer liegen.

Entscheidend bei der technischen Lehre ist, daß also möglichst flache Wellenformen an der Oberfläche erzielt werden, im besten Falle eine vollständig glatte Oberfläche, d.h. praktisch ohne Grund oder Restrauhigkeit.

Eine derartige Wellenform kann erzielt werden durch eine Oberflächenbehandlung des Materials, wie z.B. eine Verchromung oder eine andere Beschichtung, sie kann aber auch durch eine spezielle Behandlung der Oberfläche des Bleches selbst erzielt werden. Eine derartige spezielle Behandlung könnte z.B. ein glattes Auswalzen des Bleches sein mit dem Ziel, die Scharten, Riefen und dergleichen, zu vermeiden.

Hierbei wird es bevorzugt, als einziges Abschirmblech einer derartigen Wärmeschutzeinrichtung von 0,5 bis 1 mm zu verwenden. Als Blech kommen hierbei Aluminiumbleche, aluminiumeloxierte Bleche, und insbesondere Aluminium-Magnesiumlegierungen in Betracht.

Günstig hat sich auch die Verwendung von Reinaluminium wegen des Zeitstandverhaltens und der Temperaturfestigkeit herausgestellt.

Es hat sich allerdings gezeigt, daß durch die erzielte hochglatte Oberfläche ein Walzen erschwert wird, da die Reibung zwischen Walze und Blech zu gering wird. Deshalb ist es vorgesehen, an definierten Stellen des Bleches eine gewisse höhere Rauhigkeit zuzulassen,um sicheres Walzen zu gewährleisten. Dies geschieht dadurch, daß gewisse Riefen und Erhebungen in der Blechoberfläche zugelassen werden und/oder in die Oberfläche eine noppenartige Struktur eingeprägt wird.

Es hat sich nun überraschenderweise herausgestellt, daß eine derartige Wärmeschutzeinrichtung, bestehend aus lediglich einem einzigen oberflächenbehandelten Blech, wie oben beschrieben, die gleichen oder sogar bessere Isolationsfähigkeiten hat als vergleichsweise die dem Stand der Technik zugehörenden Wärmeschutzeinrichtungen, die aus stapelförmigen, übereinander liegenden Matten bestehen, die auf einem Blech aufgeklebt oder eingefalzt sind. Es werden demgemäss nach der Erfindung auch die Nachteile der Wärmeschutzeinrichtungen nach dem Stand der Technik vermieden, denn mit der Verwendung eines einzigen Bleches ergibt sich nun ein außerordentlich geringes Gewicht, ein günstiges Zeitstandverhalten und ein verbessertes Korrosionsverhalten, weil derartige unkontrollierte Korrosionsprozesse im Zwischenraum zwischen stapelförmig übereinander gelegten Folien nicht mehr geschehen können. Außerdem kommt es nicht mehr zu grobkristallinen Umformungen und den damit verbundenen Nachteilen. Im übrigen ist auch die Vibrationsfestigkeit verbessert, weil dieses einzige Blech als reguläres Teil definiertes Schwingungsverhalten aufweist, welches man durch entsprechende Formgebung und ggf. durch die Anbringung von Sicken noch beeinflussen kann.

Weil man nach der Erfindung mit einem erfindungsgemässen Blech die vorher erwähnten Streckbereiche von 7 - 10% des Ausgangswertes vermeidet, kommt es demzufolge auch nicht zu diesen grobkristallinen Umformungen. Auf jeden Fall kommt es zu weit weniger kristallinen Umformungen, weil ein dementsprechend dickes Blech verwendet werden kann, was beim Stand der Technik nicht der Fall war.

Das Grundprinzip der vorliegenden Erfindung liegt darin, einen auf die Blechoberfläche auftreffenden Wärmestrahl wie einen Spiegel - ohne Nebenstrahlungen oder diffuse Strahlung - direkt zurück zu reflektieren, ohne Querstrahlungen zu erzeugen, die mit einem Querauftreffen des Wärmestrahls auf die Blechoberfläche und einem damit verbundenen nachteiligen Aufheizen verbunden sind.

Die Blechoberfläche nach der vorliegenden Erfindung soll praktisch wie ein Spiegel wirken, der auftreffende Wärmestrahlen im wesentlichen im gleichen Winkel oder in einem ähnlichen Winkel zurückstrahlt, ohne eine Querstrahlung (Diffusstrahlung) an der Blechoberfläche zu erzeugen.

Erfindungsgemäss werden also diffuse Einstrahlungen von Wärmestrahlen auf der Blechoberfläche durch die besondere Behandlung der Blechoberfläche vermieden.

Mit der erfindungsgemässen Ausgestaltung der Oberfläche dieses Metallmaterials in Form eines direkt reflektierenden Wärmespiegels ergibt sich der weitere Vorteil, daß man nun durch die Formgebung des Schildes als solches den Wärmestrahl definiert in eine bestimmte Richtung zurückstrahlen kann. Dieses Verhalten ist teilweise gefragt, weil man z.B. den zurückreflektierten Wärmestrahl neben Teile des Auspuffes strahlen kann, wo sie ins Freie gelangen, aber den Auspuff selbst nicht mehr aufheizen.

Im Bereich zwischen dem Motor und dem Katalysator ist es aber andererseits erwünscht, diesen Auspuffbereich möglichst hoch aufzuheizen, um die Wirkung des Katalysators schnell einsetzen zu lassen. In diesen Bereichen wird es deshalb bevorzugt, den erfindungsgemässen Wärmespiegel direkt auf die Auspuffanlage zu richten, um dort eine konstante Vorheizung zu erreichen.

Derartige gezielte Wärmereflektionen waren mit den Blechoberflächen und den besagten Folienpaket nach dem Stand der Technik nicht möglich.

Es wurde vorher schon angegeben, daß in einer ersten einfachen Ausführungsform es genügt, eine einzige Seite dieses Hitzeschildes mit der erfindungsgemässen Oberfläche auszurüsten.

Es wird bevorzugt, wenn zwei Seiten ausgerüstet sind, weil dann ein besserer Wirkungsgrad erzielt wird. Die Erfindung bezieht sich jedoch auf die Zurichtung einer einzigen Oberfläche dieses Hitzeschildes.

In einer Weiterbildung der vorliegenden Erfindung ist es vorgesehen, zusätzlich zu dem einseitig oder beidseitig an der Oberfläche endbehandelten Hitzeschild noch ein weiteres Abschirmblech zu verwenden, welches in einem Luftabstand in der Regel zwischen 2 und 5 mm von dem Hitzeschild im Abstand angeordnet ist und zwischen dem Hitzeschild und dem Abschirmblech einen entsprechenden Hohlraum, der mit Luft gefüllt ist, definiert.

Ein derartiges Abschirmblech hat z.B. eine Stärke von 0,1 bis 0,5 mm und besteht bevorzugt auch aus einem Reinaluminium oder einer Aluminium-Magnesium-Legierung.

In einer Weiterbildung der vorliegenden Erfindung ist es vorgesehen, daß auch dieses Abschirmblech eine Oberfläche oder auch beide Oberflächen in der erfindungsgemässen Weise entbehandelt hat. Es wird hierbei bevorzugt, beide Oberflächen, d.h. also die Aussen- und die Innenseite in der erfindungsgemässen Weise zu behandeln.

Hierauf ist jedoch die Erfindung nicht beschränkt. Im einfachsten Fall beansprucht die Erfindung die Vergütung einer einzigen Seite dieses Abschirmbleches und ebenso die Vergütung einer einzigen Oberfläche des darunter angeordneten Hitzeschildes.

Die Verwendung von zwei derartigen Abschirmeinrichtungen hat also den Vorteil, daß die Wärmestrahlung weiter reduziert wird und zwar durch dieses zweite Blech, weil sich an diesem zweiten Blech sowohl an der Innenseite als auch an der Aussenseite die vorher erwähnten Spiegelmechanismen befinden, die zu einer weiteren Reduzierung der insgesamt abgestrahlten Wärmestrahlung führen.

Der weitere Vorteil der zweiten Oberfläche (Verwendung des Abschirmbleches) ist der, daß wenn die erste Oberfläche durch Verschmutzung beeinträchtigt oder zerstört wird, immer noch eine zweite wärmeabstrahlende Oberfläche (auf dem Abschirmblech) vorhanden ist.

Bei der Verwendung eines zweiten Abschirmbleches in Verbindung mit dem vorher genannten Hitzeschild wird es im übrigen bevorzugt, wenn dieses Abschirmblech in Richtung zum Hitzeschild federnd eingebaut ist, so daß ein Eindrücken des Abschirmbleches in Richtung zum Hitzeschild wieder zu einem Rückfedern dieses Abschirmbleches in seiner Ausgangslage führt.

Im Abschirmblech können die strukturverstärkenden Sicken angeordnet werden, die bevorzugt als kreuzweise Sicken ausgebildet sind, wobei der Sickengrund bevorzugt in Richtung in den Hohlraum zwischen dem Abschirmblech und dem Hitzeschild zeigt. Damit wird erreicht, daß wenn das Abschirmblech in Richtung auf das Hitzeschild eingedrückt wird, der Sickengrund auf die Oberfläche des Hitzeschildes auftrifft und hierdurch eine gewisse Wegbegrenzung gegeben ist.

Es wird hierbei bevorzugt, wenn die kreuzweise angeordneten Sicken in den Kreuzungspunkten Erhöhungen (Sickenspitzen) aufweisen. Diese Spitzen bilden dann eine punktförmige Anschlagfläche beim Eindrücken des Abschirmbleches in Richtung auf das Hitzeschild.

Im folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Längsschnitt durch eine Auspuff-Anlage mit Hitzeschild,
- Figur 2:: der Schnitt gemäss der Linie A-A in Figur 1 in einer ersten Ausführungsform,
- Figur 3:: der gleiche Schnitt gemäss Figur A gemäss dem Schnitt A-A in Figur 1 in einer zweiten Ausführungsform,
- Figur 4:: eine gegenüber Figur 3 abgewandelte Ausführungsform einer Wärmeschutzeinrichtung,
- Figur 5:: die Draufsicht in Richtung des Pfeiles V in Figur 4,
- Figur 6:: ein Schnitt gemäss dem Detail 1 in Figur 5 durch ein Abschirmblech mit darunter liegendem Hitzeschild,
- Figur 7:: eine Anordnung einer Blechoberfläche nach dem Stand der Technik mit nicht erwünschter Oberfläche,
- Figur 8:: eine gleiche Anordnung wie Figur 7 mit einer ebenfalls nicht erwünschten Oberfläche,
- Figur 9:: eine nach der Erfindung ausgebildete Blechoberfläche im Schnitt.

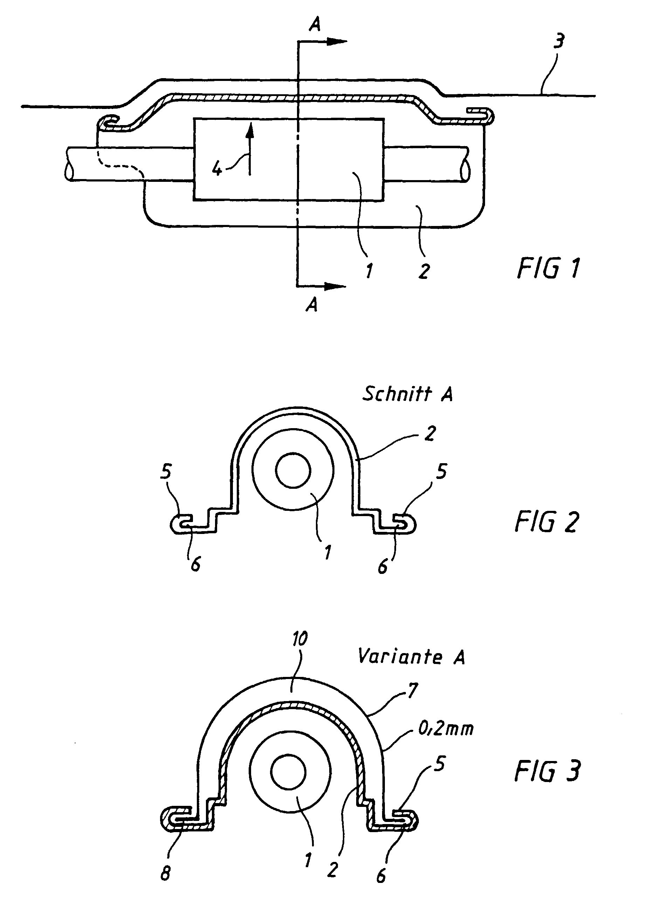

In Figur 1 ist der Querschnitt durch eine Auspuffanlage dargestellt, wobei ein Auspufftopf 1 nach oben durch das erfindungsgemässe Hitzeschild 2 abgedeckt wird, welches sich auch seitlich über die Seitenflächen des Auspufftopfes 1 hinaus erstreckt.

Die Hitzeabstrahlung des Auspufftopfes 1 erfolgt bevorzugt in Pfeilrichtung 4 nach oben und soll durch das Hitzeschild 2 möglichst von dem Fahrzeugboden 3 ferngehalten werden.

Die Figur 2 zeigt, daß das Hitzeschild 2 aus einem einzigen, durchgehenden Blechteil ausgebildet ist, welches bevorzugt randseitige Bördelungen 5 aufweist, die jeweils einen Aufnahmeraum 6 definieren.

Die Erfindung ist jedoch nicht auf die Anbringung derartiger Bördelungen beschränkt; derartige Bördelungen können auch entfallen.

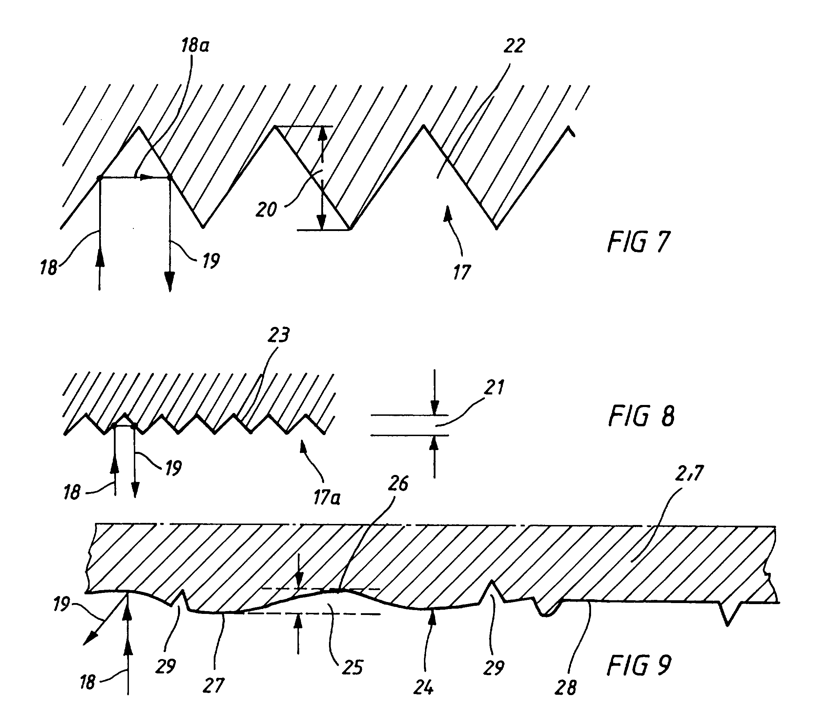

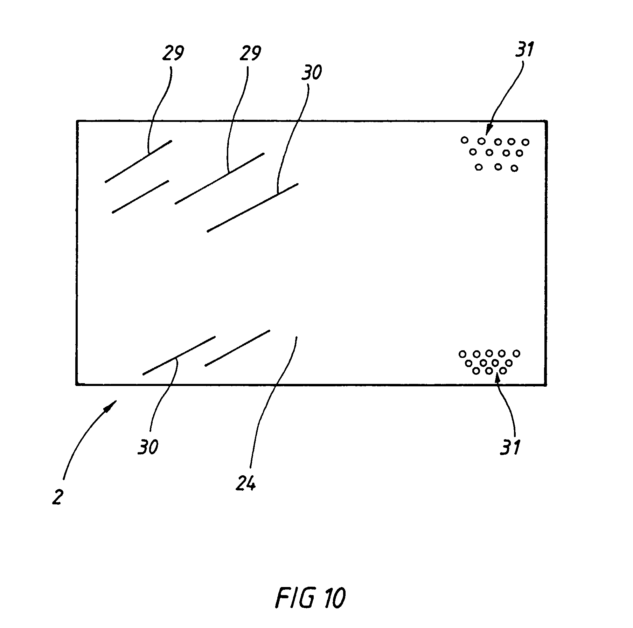

Bevorzugt ist hierbei die Innen- und die Aussenseite des Hitzeschildes 2 mit der in Figur 9 näher beschriebenen Oberfläche ausgestattet.

Es genügt jedoch, auch nur eine der Oberflächen, z.B. die Innen- oder die Aussenseite, mit der erfindungsgemässen Oberfläche auszugestalten.

Die Figur 3 zeigt als weitere Variante die Ausführung nach Figur 2 ein zusätzliches Abschirmblech 7, welches bei sonst gleichen Aufbau des Hitzeschildes 2 über das Hitzeschild 2 herübergestülpt ist und mit seitlichen Rändern 8 in den Aufnahmeraum 6 des Hitzeschildes 2 aufgenommen ist und dort festgeklemmt wird.

Wie vorher im allgemeinen Beschreibungsteil erwähnt, können weder beide Oberflächen dieses Abschirmbleches 7 oder nur eine der Oberflächen mit der erfindungsgemässen Oberflächenvergütung gemäss Figur 9 ausgestattet sein.

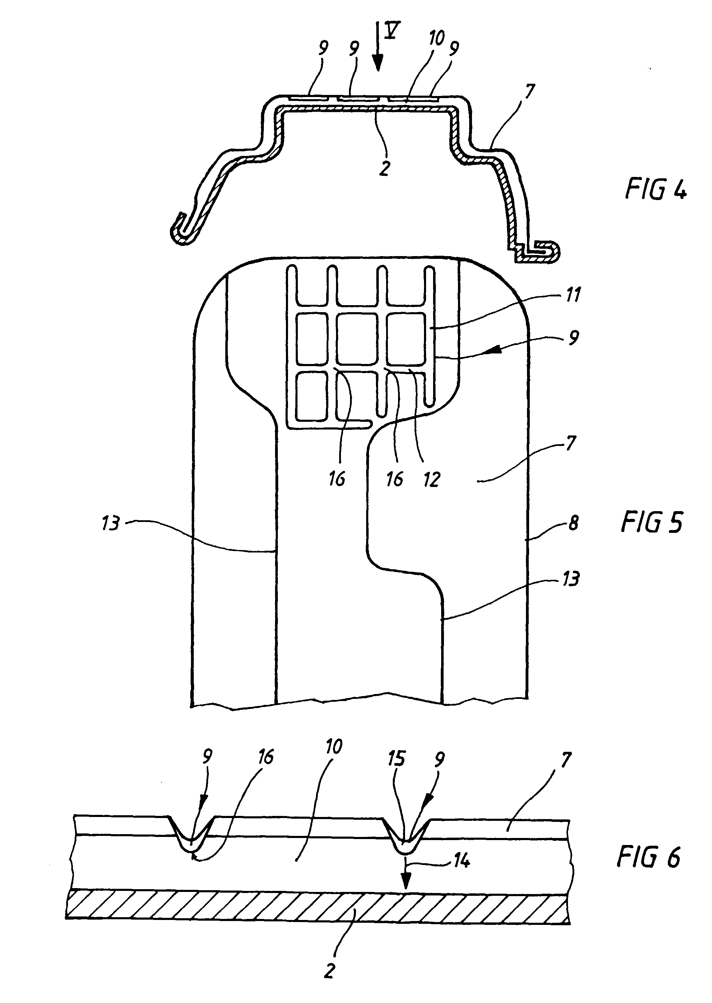

Die Figur 4 zeigt in Abwandlung zur Figur 3, daß das Abschirmblech 7 auch abstandshaltende Sicken 9 aufweisen kann, welche bevorzugt in den Hohlraum 10 zwischen dem Abschirmblech 7 und der Aussenseite des Hitzeschildes 2 hineinragen.

Die Sicken 9 sind gemäss Figur 5 bevorzugt kreuzförmig angeordnet und bestehen aus sich kreuzenden Längs- und Querstegen 11,12, die sich im Bereich von Kreuzungspunkten kreuzen und dort Sickenspitzen 16 bilden, die gemäss Figur weiter in den Hohlraum 10 hineinragen, als die übrigen Bereiche der Sicken 9.

Wird nun das Abschirmblech 7 von aussen her in Richtung auf das Hitzeschild 2 eingedrückt, dann schlagen die Sickenspitzen 16, die punktförmig an den jeweiligen Sickengrund 15 angeordnet sind, in Pfeilrichtung 14 auf die Oberfläche des darunter angeordneten Hitzeschildes 2 auf und das gesamte Abschirmblech 7 federt damit elastisch zurück und bleibt unverformt.

Damit wird also eine bleibende unerwünschte Verformung des Abschirmbleches 7 vermieden.

Ebenso wird damit eine Verbindung, d.h. also ein Kontakt (d.h. also flächenförmige Verbindung) zwischen dem Hitzeschild 2 und dem Abschirmblech 7 vermieden, weil im schlimmsten Fall nur punktförmige Sickenspitzen 16 auf der Oberfläche des Hitzeschiles 2 aufliegen könnten.

Im übrigen ist aus Figur 5 noch zu entnehmen, daß das Abschirmblech 7 entsprechende Biegekanten 13 aufweist, welche eine bestimmte Formgebung oder Kontur verleihen.

In den Figuren 7 und 8 sind Beispiele für nicht nach der Erfindung erwünschte Blechoberflächen 17, 17a dargestellt.

Hier ist erkennbar, daß derartige Blechoberflächen 17,17a z.B. durch Schleifen oder Polieren hergestellt werden, was nach der Erfindung gerade nicht erwünscht wird, denn es werden hiermit unstetige von den Schleifkörpern herrührende Riefen 22,23 erzeugt, die im wesentlichen V-förmig profiliert sind und die einen einfallenden Wärmestrahl 18 zunächst in Form des Wärmestrahls 18a querstrahlen, um ihn dann an den Wärmestrahl 19 wieder zurück zu reflektieren.

Der querstrahlende Wärmestrahl 18a heizt aber die Blechoberfläche unnötig auf, wodurch die Wärmeisolationsfähigkeit stark herabgesetzt wird.

Die Figuren 7 und 8 zeigen im weiteren, daß es nicht auf die Rauhtiefe 20,21 darauf ankommt, d.h. also auch bei relativ geringer Rauhtiefe 21, wie in Figur 8 dargestellt, kommt es zu einer unerwünschten Querstrahlung zwischen dem Wärmestrahl 18 und dem Wärmestrahl 19, wodurch die Blechoberfläche 17a in unerwünschter Weise aufgeheizt wird.

Bei der vorliegenden Erfindung (siehe Figur 9) ist hingegen eine Blechoberfläche 24 vorgeschlagen, die eine unerwünschte Wärmestrahlung in paralleler oder in geringem Winkel zur Oberfläche gerichteten Richtung vermeidet.

Ein in Richtung 18 auf die Blechoberfläche 24 einstrahlender Wärmestrahl wird in Richtung des Wärmestrahls 19 reflektiert, ohne daß parallel oder im Winkel zur Oberfläche gerichtete Wärmestrahlen 18a erzeugt werden. Es wird also sowohl eine diffuse Strahlung an der Oberfläche vermieden, als auch eine quer zu den einstrahlenden Wärmestrahlen 18 verlaufende Strahlung vermieden.

Es soll also auf jeden Fall nach der Erfindung ein zweites Auftreffen des auf die Blechoberfläche 24 einstrahlenden Wärmestrahls 18 vermieden werden, und es soll möglichst nur ein einziger Wärmestrahl 19 von der Blechoberfläche abgestrahlt werden, ohne auf die Blechoberfläche 24 zurückreflektiert zu werden.

Hier liegt also der Kern der vorliegenden Erfindung, welche zeigt, daß auch eine so ausgestattete Blechoberfläche noch eine gewisse Welligkeit haben kann, so wie es mit der Rauhtiefe 25 dargestellt ist. Es gibt hier im der Blechoberfläche jedoch nur stetige Übergänge, so daß mit runden Radien, die eben nicht die V-förmigen Spitzen aufweisen, wie sie anhand der unerwünschten Blechoberflächen der Figuren 7 und 8 gezeigt sind.

Hierbei ist wichtig, daß also auch eine Rauhtiefe 25 zwischen einem Wellental 26 und einem Wellenberg 27 vorhanden sein kann. Es können jedoch auch Geraden 28 vorgesehen werden, welche in idealer Weise die Bedingungen erfüllen, daß nämlich ein Eintreffen der Wärmestrahlen 18 genau in die gleiche Richtung wieder zurück reflektiert wird.

Der Erfindungsgedanke der vorliegenden Erfindung wird nicht dadurch verlassen, daß im Bereich der Blechoberfläche 24 noch zusätzliche V-förmige Riefen 29 und Erhebungen 30 vorhanden sind, die z.B. Schleifspuren darstellen oder ähnliche Verletzungen der Blechoberfläche, die in definierten Bereichen des Blechs erwünscht und tolerierbar sind, um den Reibschluß zwischen Blech und Walze beim Hochglanzwalzen sicherzustellen.

Es wird der Erfindungsgedanke der vorliegenden Erfindung nicht verlassen, wenn z.B. 80% einer erfindungsgemässen Blechoberfläche 24 die erwünschten Reflektionseigenschaften haben und der Rest mit Riefen 29 und Erhebungen 30 besetzt ist, welche zwar die Reflektionseigenschaften verschlechtern, aber nur in so unbedeutender Weise, daß der gesamte Erfolg der vorliegenden Erfindung noch erreicht wird.

Statt Riefen 29 und Erhebungen 30 ist es auch vorgesehen, feine Noppen 31 in das Blech einzuprägen, um durch dieses Relief die Friktien zwischen Blech und Walze zu erhöhen.

Der Kern der vorliegenden Erfindung liegt also darin, daß der überwiegende Teil der erfindungsgemässen Blechoberfläche mit den vorher erwähnten reflektierenden Eigenschaften ausgestattet ist, wobei es eben lediglich nur auf den überwiegenden Teil, nicht aber die vollständige Fläche darauf ankommt.

Eine derartige Fläche kann z.B. durch Walzen mit besonders ausgestalteten und besonders vergüteten Walzenoberflächen hergestellt werden; sie kann aber auch durch Polieren, Beschichten, Verspiegeln und dergleichen Maßnahmen hergestellt werden, die zu dem erfindungsgemässen Erfolg führen.

### Zeichnungs-Legende

- 1: Auspufftopf
- 2: Hitzeschild
- 3: Fahrzeugboden
- 4: Pfeilrichtung
- 5: Bördelung
- 6: Aufnahmeraum
- 7: Abschirmblech (Außenschale)
- 8: Rand
- 9: Sicke
- 10: Hohlraum
- 11: Längssteg
- 12: Quersteg
- 13: Biegekante
- 14: Pfeilrichtung
- 15: Sickengrund
- 16: Sickenspitze
- 17: Blechoberfläche 17a
- 18: Wärmestrahl 18a Wärmestrahl
- 19: Wärmestrahl
- 20: Rauhtiefe
- 21: Rauhtiefe
- 22: Riefe
- 23: Riefe
- 24: Blechoberfläche
- 25: Rauhtiefe
- 26: Wellental
- 27: Wellenberg
- 28: Gerade
- 29: Riefen
- 30: Erhebungen
- 31: Noppen

## Patentansprüche

1. Wärmeabschirmeinrichtung, insbesondere zur Abschirmung wärmestrahlender Teile, **dadurch gekennzeichnet**, daß mindestens ein Hitzeschild (2) vorgesehen ist, der den abzuschirmenden Wärmestrahler teilweise umgibt, wobei mindestens die dem Wärmestrahler zugewandte Oberfläche (24) des Hitzeschildes (2) derart oberflächenvergütet ist, daß eine stetig verlaufende Rauhigkeit erzielt wird, so daß die auf die Oberfläche (24) auftreffenden Wärmestrahlen (18) größtenteils nur einmal reflektiert werden.

2. Wärmeabschirmeinrichtung nach Anspruch 1,
**dadurch gekennzeichnet**, daß die Rauhigkeit maximal 0,5 Mikrometer beträgt.

3. Wärmeabschirmeinrichtung nach einem der Ansprüche 1 oder 2, **dadurch gekennzeichnet**, daß die Oberflächenvergütung durch Verchromen erfolgt.

4. Wärmeabschirmeinrichtung nach einem der Ansprüche 1 oder 2, **dadurch gekennzeichnet**, daß die Oberflächenvergütung durch Verspiegeln erfolgt.

5. Wärmeabschirmeinrichtung nach einem der Ansprüche 1 oder 2, **dadurch gekennzeichnet**, daß die Oberflächenvergütung durch Kaltwalzen erfolgt.

6. Wärmeabschirmeinrichtung nach einem der Ansprüche 1 bis 5, **dadurch gekennzeichnet**, daß der Hitzeschild mindestens an zwei gegenüberliegenden Seiten Bördelungen (5) aufweist, die jeweils einen Aufnahmeraum (6) bilden.

7. Wärmeabschirmeinrichtung nach einem der Ansprüche 1 bis 6, **dadurch gekennzeichnet**, daß der Hitzeschild (2) eine Dicke zwischen 0,5 bis 1 mm aufweist.

8. Wärmeabschirmeinrichtung nach einem der Ansprüche 1 bis 7, **dadurch gekennzeichnet**, daß parallel zu mindestens einer Oberfläche des Hitzeschilds (2) ein zusätzliches Abschirmblech (7) vorgesehen ist, welches mit dem Hitzeschild (2) verbunden ist.

9. Wärmeabschirmeinrichtung nach Anspruch 8,
**dadurch gekennzeichnet**, daß das Abschirmblech (7) bevorzugt mit seinen Rändern (8) in die jeweiligen Aufnahmeräume (6) des Hitzeschilds (2) eingreift und verankert ist.

10. Wärmeabschirmeinrichtung nach einem der Ansprüche 8 und 9, **dadurch gekennzeichnet**, daß mindestens eine Oberfläche des Abschirmbleches (7) oberflächenvergütet ist.

11. Wärmeabschirmeinrichtung nach einem der Ansprüche 8 bis 10, **dadurch gekennzeichnet**, daß die Dicke des Abschirmbleches (7) zwischen 0,1 bis 0,5 mm beträgt.

12. Wärmeabschirmeinrichtung nach einem der Ansprüche 1 bis 11, **dadurch gekennzeichnet**, daß der Abstand zwischen Hitzeschild (2) und Abschirmblech (7) bevorzugt 2 bis 5 mm beträgt.

13. Wärmeabschirmeinrichtung nach einem der Ansprüche 1 bis 12, **dadurch gekennzeichnet**, daß das Abschirmblech (7) Sicken (9) aufweist, welche bevorzugt Längs- und Querstege (11,12) bilden, die in ihrem Kreuzungspunkt Sickenspitzen (16) bilden.

14. Wärmeabschirmeinrichtung nach einem der Ansprüche 1 bis 13, **dadurch gekennzeichnet**, daß die Sickenspitzen (16) in Richtung eines Hohlraums (10) zwischen Hitzeschild (2) und Abschirmblech (7) weisen.

15. Wärmeabschirmeinrichtung nach einem der Ansprüche 1 - 14, **dadurch gekennzeichnet**, daß Hitzeschild (2) und/oder Abschirmblech (7) in definierten Oberflächenbereichen Riefen (29) und Erhebungen (30) und/oder Noppen (31) aufweisen.

## Claims

1. Thermal shield device, particularly for shielding parts which radiate heat, characterized in that at least one heat shield (2) is provided which partially surrounds the heat radiator to be shielded, in which at least the surface (24) of the heat shield (2) which faces towards the heat radiator is surface finished in a way that yields a roughness with a continuous profile, so that most of the heat rays (18) impinging on the surface (24) are reflected only once.

2. Thermal shield device according to Claim 1, characterized in that the surface roughness does not exceed 0.5 micrometre.

3. Thermal shield device according to Claim 1 or 2, characterized in that the surface finishing is effected by chromium plating.

4. Thermal shield device according to Claim 1 or 2, characterized in that the surface finishing is effected by vacuum coating.

5. Thermal shield device according to Claim 1 or 2, characterized in that the surface finishing is effected by cold rolling.

6. Thermal shield device according to any one of Claims 1 to 5, characterized in that the heat shield has flanges (5) at least on two opposite sides, each forming a receiving space (6).

7. Thermal shield device according to any one of Claims 1 to 6, characterized in that the heat shield (2) has a thickness of between 0.5 and 1 mm.

8. Thermal shield device according to any one of Claims 1 to 7, characterized in that an additional shield plate (7) is provided, parallel with at least one surface of the heat shield (2), and is connected to the heat shield (2).

9. Thermal shield device according to Claim 8, characterized in that the shield plate (7) is anchored and held preferably with its edges (8) in the respective receiving spaces (6) of the heat shield (2).

10. Thermal shield device according to Claim 8 or 9, characterized in that at least one surface of the shield plate (7) is surface finished.

11. Thermal shield device according to any one of Claims 8 to 10, characterized in that the thickness of the shield plate (7) is between 0.1 and 0.5 mm.

12. Thermal shield device according to any one of Claims 1 to 11, characterized in that the clearance between heat shield (2) and shield plate (7) is preferably 2 to 5 mm.

13. Thermal shield device according to any one of Claims 1 to 12, characterized in that the shield plate (7) has creases (9) preferably forming longitudinal and transverse ridges (11, 12) which form pips (16) at their intersections.

14. Thermal shield device according to any one of Claims 1 to 13, characterized in that the pips (16) point towards a hollow space (10) between heat shield (2) and shield plate (7).

15. Thermal shield device according to any one of Claims 1 to 14, characterized in that the heat shield (2) and/or the shield plate (7) have scores (29) and ridges (30) and/or knobs (31) in defined surface regions.

## Revendications

1. Dispositif formant bouclier thermique, en particulier pour isoler des pièces dégageant de la chaleur, caractérisé en ce qu'il est prévu au moins un écran thermique (2) qui entoure partiellement l'émetteur de chaleur à isoler, étant précisé qu'on traite au moins la surface (24) de l'écran thermique (2) qui est tournée vers l'émetteur de chaleur, pour obtenir une rugosité continue telle que le rayonnement thermique (18) arrivant sur la surface (24) ne soit réfléchi pratiquement qu'une fois.

2. Dispositif formant bouclier thermique selon la revendication 1, caractérisé en ce que la rugosité est au maximum de 0,5 micron.

3. Dispositif formant bouclier thermique selon la revendication 1 ou 2, caractérisé en ce que le traitement de surface se fait par chromage.

4. Dispositif formant bouclier thermique selon la revendication 1 ou 2, caractérisé en ce que le traitement de surface se fait par dépôt d'une couche réfléchissante.

5. Dispositif formant bouclier thermique selon la revendication 1 ou 2, caractérisé en ce que le traitement de surface se fait par laminage à froid.

6. Dispositif formant bouclier thermique selon l'une des revendications 1 à 5, caractérisé en ce que l'écran thermique présente au moins sur deux côtés opposés des parties repliées (5) qui forment un logement (6).

7. Dispositif formant bouclier thermique selon l'une des revendications 1 à 6, caractérisé en ce que l'écran thermique (2) présente une épaisseur située entre 0,5 et 1 mm.

8. Dispositif formant bouclier thermique selon l'une des revendications 1 à 7, caractérisé en ce qu'il est prévu, parallèlement à au moins une surface de l'écran thermique (2), une tôle isolante supplémentaire (7) qui est reliée à l'écran thermique (2).

9. Dispositif formant bouclier thermique selon la revendication 8, caractérisé en ce que la tôle isolante (7) pénètre et est ancrée de préférence avec ses bords (8) dans les logements (6) de l'écran thermique (2).

10. Dispositif formant bouclier thermique selon la revendication 8 ou 9, caractérisé en ce qu'au moins une surface de la tôle isolante (7) est traitée.

11. Dispositif formant bouclier thermique selon l'une des revendications 8 à 10, caractérisé en ce que l'épaisseur de la tôle isolante (7) est située entre 0,1 et 0,5 mm.

12. Dispositif formant bouclier thermique selon l'une des revendications 1 à 11, caractérisé en ce que l'écartement entre l'écran thermique (2) et la tôle isolante (7) est de préférence de 2 à 5 mm.

13. Dispositif formant bouclier thermique selon l'une des revendications 1 à 12, caractérisé en ce que la tôle isolante (7) présente des moulures (9) qui forment de préférence des bandes longitudinales et transversales (11, 12) définissant à leur intersection des pointes de moulure (16).

14. Dispositif formant bouclier thermique selon l'une des revendications 1 à 13, caractérisé en ce que les pointes de moulure (16) sont dirigées vers une cavité (10) définie entre l'écran thermique (2) et la tôle isolante (7).

15. Dispositif formant bouclier thermique selon l'une des revendications 1 à 14, caractérisé en ce que l'écran thermique (2) et/ou la tôle isolante (7) présentent dans des zones superficielles définies des rainures (29) et des reliefs (30) et/ou des bosses (31).
